# EUROPEAN PATENT APPLICATION

(11) **EP 4 797 599 A1**
(43) Date of publication of application: **26.08.2026**
(21) Application number: 23955750.7
(22) Date of filing: 19.10.2023
(51) Int. Cl.: H04L 5/00, H04W 12/10, H04W 72/04

(54) **METHOD FOR COMMUNICATION AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: ZHONG, Yi, Dongguang, Guangdong 523860 (CN); HUANG, Zhenzhen, Dongguang, Guangdong 523860 (CN); LI, Yapu, Dongguang, Guangdong 523860 (CN); LU, Liuming, Dongguang, Guangdong 523860 (CN); GAO, Ning, Dongguang, Guangdong 523860 (CN); LUO, Chaoming, Dongguang, Guangdong 523860 (CN); ZHANG, Jun, Dongguang, Guangdong 523860 (CN); WU, Zuomin, Dongguang, Guangdong 523860 (CN); ZHAO, Nande, Dongguang, Guangdong 523860 (CN)
(74) Representative: Taor, Simon Edward William
(86) International application number: PCT/CN2023/125461
(87) International publication number: WO 2025/081424

(57) **Abstract**

Provided are a method for communication and a communication device. The method comprises: a first device executes a first operation on the basis of first information, wherein the first device receives signals by means of a first link and a second link, the channel center frequency of the first link is lower than the channel center frequency of the second link, the first information is related to phase noise information of the first link, and the first operation is related to phase noise of the second link. It can be understood that the present application provides a technical solution for realizing high-frequency link phase noise estimation under a high- and low-frequency multi-link operation framework. In addition, a high-frequency link has a high data transmission rate but high overhead and a short transmission distance, while a low-frequency link has a low data transmission rate but low overhead and a long transmission distance. By means of the present application, low-frequency compensation for high frequencies can be achieved, thereby minimizing the impact of phase noise on a high-frequency band, achieving fast and reliable data transmission.

## Description

### TECHNICAL FIELD

The present disclosure relates to the technical field of communication, and more particularly, to a communication method and a communication device.

### BACKGROUND

Phase noise is an important index of measuring the frequency stability quality of frequency standard sources (a high stability crystal oscillator, an atomic frequency standard, etc.), and is also a modulation noise of a communication system. Phase noise estimation and correction technology may include phase reference data assistance and decision data guidance. There are many problems in the phase noise estimation and correction technology.

### SUMMARY

The present disclosure provides a communication method and a communication device. Various aspects of the present disclosure are described below.

A first aspect provides a communication method, which includes following operations. A first device performs a first operation according to first information. The first device receives a signal through a first link and a second link, a channel center frequency of the first link is lower than a channel center frequency of the second link, the first information is related to phase noise information of the first link, and the first operation is related to phase noise of the second link.

A second aspect provides a communication method, which includes following operations. A second device receives a first field transmitted by a first device. The first device receives a signal through a first link and a second link, a channel center frequency of the first link is lower than a channel center frequency of the second link, the first information is related to phase noise information of the first link, and the first operation is related to phase noise of the second link. The first field indicates one or more of the following pieces of information: whether the first device performs a first operation according to the first information; or a tone plan of the second link.

A third aspect provides a communication device. The communication device is a first device, and the communication device includes an execution unit configured to execute a first operation according to first information. The first device receives a signal through a first link and a second link, a channel center frequency of the first link is lower than a channel center frequency of the second link, the first information is related to phase noise information of the first link, and the first operation is related to phase noise of the second link.

A fourth aspect provides a communication device. The communication device is a second device, and the communication device includes a receiving unit configured to receive a first field transmitted by the first device. The first device receives a signal through a first link and a second link, a channel center frequency of the first link is lower than a channel center frequency of the second link, the first information is related to phase noise information of the first link, and the first operation is related to phase noise of the second link. The first field indicates one or more of the following pieces of information: whether the first device performs a first operation according to the first information; or a tone plan of the second link.

A fifth aspect provides a communication device including a processor and a memory for storing one or more computer programs. The processor is configured for invoking the computer programs in the memory to enable the communication device to execute a part or all of the operations in the method of the above various aspects.

A sixth aspect of the embodiments of the present disclosure provides a communication system including the above-described communication device. In another possible design, the system may further include other devices that interact with the communication device in the solutions provided by the embodiment of the present disclosure.

A seventh aspect of the embodiments of the present disclosure provides a computer-readable storage medium having a computer program stored thereon that causes a communication device to perform a part or all of the operations in the method of the above various aspects.

An eighth aspect of the embodiments of the present disclosure provides a computer program product including a non-transitory computer-readable storage medium having a computer program stored thereon. The computer program is operable to cause a communication device to execute a part or all of the operations of the method of the various aspects described above. In some implementations, the computer program product may be a software installation package.

A ninth aspect of the embodiments of the present disclosure provides a chip including a memory and a processor. The processor can invoke and run a computer program from the memory to implement a part or all of the operations in the method of the above various aspects.

It can be understood that the present disclosure provides a technical solution for realizing phase noise estimation of the high-frequency link in a high and low frequency multi-link operation framework. In addition, the high frequency (HF) link has a high data transmission rate but high overhead and a short transmission distance, while the low frequency (LF) link has a low data transmission rate but low overhead and a long transmission distance. Through the present disclosure, low frequency compensation for high frequency can be realized, to reduce the influence of phase noise on the high frequency band as much as possible, thereby realizing fast and reliable data transmission.

### BRIEF DESCRIPTION OF THE DRAWINGS

FIG. 1 is a schematic diagram of a wireless communication system to which an embodiment of the present disclosure is applied.
FIG. 2 is a schematic diagram of a resource unit (RU) distribution of a physical layer protocol data unit (PPDU).
FIG. 3 is a schematic flowchart of a communication method according to an embodiment of the present disclosure.
FIG. 4 is a schematic diagram of a scenario to which the method provided by the embodiment of the present disclosure is applicable.
FIG. 5A is an example diagram of an ultra-high reliability (UHR) multi-user (MU) PPDU format.
FIG. 5B is an example diagram of a UHR trigger-based (TB) PPDU format.
FIG. 6 is a schematic diagram of a simulation result provided by the present disclosure.
FIG. 7 is a schematic structural diagram of a communication device according to an embodiment of the present disclosure.
FIG. 8 is a schematic structural diagram of another communication device provided by an embodiment of the present disclosure.
FIG. 9 is a schematic structural diagram of a communication device according to an embodiment of the present disclosure.

### DETAILED DESCRIPTION

Hereinafter, technical solutions in the present disclosure will be described with reference to the accompanying drawings.

### Communication System

The technical solutions of the embodiments of the present disclosure can be applied to various communication systems, such as wireless local area networks (WLAN), wireless fidelity (Wi-Fi), high performance radio local area networks (HIPELAN), wide area networks (WAN), Cellular networks or other communication systems, etc. As another example, the technical solution provided by the embodiment of the present disclosure can be applied to a communication system adopting the 802.11 standard. Exemplarily, the 802.11 standard includes, but is not limited to, the 802.11 ax standard, the 802.11 be standard, the next generation 802.11 standard, and the like.

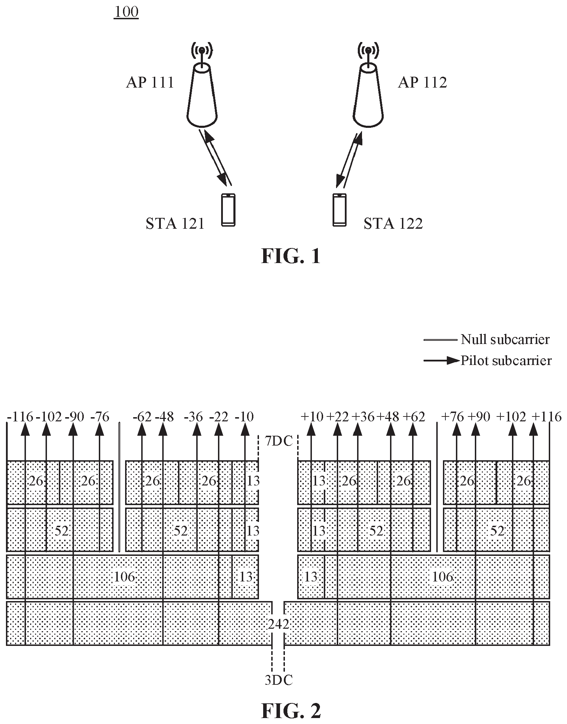

FIG. 1 shows a schematic diagram of a communication system to which an embodiment of the present disclosure is applicable. Referring to FIG. 1, a communication device in the communication system 100 may include an access point (AP) 111, an AP 112, and a station (STA) 121 and a STA 122. The STA 121 may access the network through the AP 111, and the STA 122 may access the network through the AP 112.

In some implementations, the STA may establish an association relationship with one or more APs, and communication may be performed between the STA and the AP which have the association relationship. Referring to FIG. 1, the AP 111 may communicate with the STA 121 after an association relationship is established between the AP 111 and the STA 121, and the AP 112 may communicate with the STA 122 after an association relationship is established between the AP 112 and the STA 122.

In some implementations, the communication in the communication system 100 may be a communication between an AP and a non-AP STA, a communication between a non-AP STA and a non-AP STA, or a communication between an STA and a peer STA. The peer STA may be a device which performs peer-to-peer communicating with the STA, for example, the peer STA may be an AP or a non-AP STA.

It should be understood that FIG. 1 exemplarily illustrates two AP STAs and two non-AP STAs. The communication system 100 may further include a larger number of AP STAs, or the communication system 100 may include other number of non-AP STAs, which are not limited by the embodiments of the present disclosure.

Further, the above-described communication system can be applied to a scenario of multi-device cooperation, such as multiple access points (Multi-AP) cooperation, or multi-site cooperation.

In the embodiments of the present disclosure, the names of AP and/or STA are not limited. In some scenarios, the AP may also be referred to as an AP STA, that is, the AP may also be a STA in a sense. In other scenarios, the STA may also be referred to as a non-AP STA.

In some scenarios, the above-described communication device may also be a "multi-link device (MLD)", that is, a device that can communicate over multiple communication links. The multiple communication links may include communication links of different frequency bands, for example, may include a millimeter wave frequency band and/or a low frequency band. Generally, if the multi-link device is an AP, the AP may also be referred to as an AP MLD. If the multi-link device is a non-AP STA, the STA may also be referred to as a non-AP MLD.

In the embodiments of the present disclosure, an AP may be a device in a wireless network. The AP may be a communication entity such as a communication server, a router, a switch, or a network bridge. Alternatively, the AP device may include various types of macro base stations, micro base stations, relay stations, etc. Of course, the AP may also be a chip, a circuit, or a processing system in the aforementioned various types of devices, so as to implement the methods and functions described in the embodiments of the present disclosure. The AP devices can be applied to various scenarios, such as sensor nodes (e.g., smart water meters, smart electricity meters, smart air detection nodes) in smart cities, smart devices (e.g., smart cameras, projectors, displays, televisions, audio systems, refrigerators, washing machines, etc.) in smart homes, nodes in the Internet of Things (IoT), entertainment terminals (e.g., wearable devices such as AR and VR), smart devices (e.g., printers, projectors, etc.) in smart offices, vehicle networking devices in the Internet of Vehicles (IoV), and some infrastructure (e.g., vending machines, self-service navigation stations in shopping malls, self-service cash registers, self-service ordering machines) in daily life scenarios.

In some implementations, the role of the STA is not fixed in the communication system, and the STA may act as an AP in some scenarios. For example, in the scenario where a mobile phone is connected to the router, the mobile phone may be a non-AP STA, while in case where the mobile phone serves as a hot spot for other mobile phones, the mobile phone acts as an AP.

In the embodiment of the present disclosure, the STA device in the embodiment of the present disclosure may be a device having a wireless transceiving function. For example, the STA device may support an 802.11 series protocol, and may communicate with an AP or other STAs. For example, the STA is any user communication device that allows a user to communicate with the AP and then communicate with a WLAN. The STA device is, for example, a user equipment (UE), a mobile station (MS), a mobile terminal (MT), an access terminal, a subscriber unit, a subscriber station, a mobile station, a mobile site, a remote station, a remote terminal, a mobile device, a user terminal, a terminal, a wireless communication device, a user agent or a user apparatus, and the like.

The STA in the embodiments of this disclosure may also be a device that provides voice/data connectivity to users, such as handheld devices having wireless connection functions, vehicle-mounted devices, etc. Examples of the STA include: mobile phones, tablet computers, laptop computers, palmtop computers, mobile internet devices (MID), wearable devices, virtual reality (VR) devices, augmented reality (AR) devices, wireless terminals in industrial control, wireless terminals in self-driving, wireless terminals in remote medical surgery, wireless terminals in smart grids, wireless terminals in transportation safety, wireless terminals in smart cities, wireless terminals in smart homes, cellular phones, cordless phones, session initiation protocol (SIP) phones, wireless local loop (WLL) stations, personal digital assistants (PDA), handheld devices with wireless communication functions, computing devices or other processing devices connected to wireless modems, vehicle-mounted devices, wearable devices, terminal devices in 5G networks, or terminal devices in the future evolved public land mobile network (PLMN) etc, which is not limited in the embodiments of the present disclosure.

By way of example and not limitation, in embodiments of the present disclosure, the STA device may also be a wearable device. The wearable device can also be called the wearable smart device, which are a general term (such as glasses, gloves, watches, clothing and shoes) for applying wearable technology to intelligently design daily wear and develop wearable devices, for example, smart watches or smart glasses, and a device which only focuses on a type of application function and need to be used in conjunction with other devices such as smart phones, such as various smart bracelets and smart jewelry for physical sign monitoring.

In addition, in the embodiment of the present disclosure, the STA device may also be a terminal device in an internet of things (IoT) system. The IoT is an important part of the future development of information technology, and has a main technical feature that articles are connected to the network through communication technology, to realize an intelligent network of human-machine interconnection and thing-thing interconnection. In the embodiment of the present disclosure, the IoT technology can achieve massive connection, deep coverage and lower power consumption for terminals through, for example, narrow band (NB) technology.

Further, in the embodiment of the present disclosure, the STA device may be a device in the Internet of Vehicles system. The communication method in the Internet of Vehicles system is collectively referred to as V2X (X stands for everything). For example, the V2X communication includes vehicle-to-vehicle (V2V) communication, vehicle-to-infrastructure (V2I) communication, vehicle-to-pedestrian (V2P) communication, vehicle-to-network (V2N) communication, and the like.

In addition, in the embodiment of the present disclosure, the STA device may also include sensors such as a smart printer, a train detector and a gas station, and the main functions of the STA device include collecting data (some terminal devices), receiving control information and downlink data of the AP device, and transmitting electromagnetic waves, and transmitting data to the AP device.

Further, the AP device in the embodiment of the present disclosure may be a device for communicating with an STA device, the AP device may be a network device in a wireless local area network, and the AP device may be used for communicating with the STA device through the wireless local area network.

From the perspective of the communication standard supported by the AP, in some implementations, the AP may be a device supporting the 802.11 be standard. The AP may be a device supporting various WLAN standards of the current and future 802.11 family such as 802.11 ax, 802.11 ac, 802.11 n, 802.11 g, 802.11 b, and 802.11 a.

From the perspective of the communication standard supported by the STA, in some implementations, the non-AP STA may support the 802.11 be standard. The non-AP STA may support various wireless local area networks (WLAN) standards of the current and future 802.11 family such as 802.11 ax, 802.11 ac, 802.11 n, 802.11 g, 802.11 b, and 802.11 a.

The frequency band that can be supported by the WLAN technology is not limited in the embodiment of the present disclosure. In some implementations, the frequency bands that the WLAN technology can support may include, but are not limited to, low frequency bands (e.g., 2.4 GHz, 5 GHz, 6 GHz), and high frequency bands (e.g., 45 GHz, 60 GHz).

It should be understood that the specific forms of the STA device and the AP device are not particularly limited in the embodiments of the present disclosure, and are merely exemplary descriptions herein.

### Tone Plan

The channel bandwidth may be divided into multiple frequency components according to a frequency interval using orthogonal frequency division multiplexing (OFDM) technology, and these components are called subcarriers or tones.

When the OFDM and multiple user multiple input multiple output (MU-MIMO) technology are applied, the spectrum bandwidth can be divided into several resource units (Rus).

The tone plan can be understood as subcarrier locations or resource block locations (RU locations) carrying data. Different channel bandwidths may correspond to different tone plans. In the following, a channel bandwidth of 20 MHz is taken as an example to explain the tone plan defined in the related art.

Fig. 2 is a schematic diagram of the RU locations in an extremely high throughput (EHT) PPDU of 20 MHz.

As shown in FIG. 2, there may be up to nine 26-tone RUs, four 52-tone RUs, two 106-tone RUs, or one 242-tone RU in the channel bandwidth of 20 MHz.

As shown in FIG. 2, each 26-tone RU includes 24 data subcarriers and 2 pilot subcarriers and each 52-tone RU includes 48 data subcarriers and 4 pilot subcarriers. Each 106-tone RU includes 102 data subcarriers and 4 pilot subcarriers. Each 242-tone RU includes 234 data subcarriers and 8 pilot subcarriers. The data subcarrier in each RU may be used for data transmission, and the pilot subcarrier may be used for phase information tracking. The pilot subcarrier distribution in the data domain may be as shown in FIG. 2, and the position index may be [± 116, ± 102, ± 90, ± 76, ± 62, ± 48, ± 36, ± 22, ± 10].

In addition, as shown in FIG. 2, the channel bandwidth may include one or more of a direct current (DC) tone, a null tone, and a guard tone.

The RU indexes (index) and a subcarrier range corresponding to the RU locations shown in FIG. 2 are shown in Table 1.

**Table 1**

| RU type | RU index and subcarrier range | | | | |
|---|---|---|---|---|---|
| 26-tone RU | RU1 [-121:-96] | RU2 [-95:-70] | RU3 [-68:-43] | RU4 [-42:-17] | RU5 [-16:-4,4:16] |
| | RU6 [17:42] | RU7 [43:68] | RU8 [70:95] | RU9 [96:121] | |
| 52-tone RU | RU1 [-121:-70] | RU2 [-68:-17] | RU3 [17:68] | RU4 [70:121] | |
| 106-tone | RU1 | | RU2 | | |
| RU | [-122:-17] | [17:122] | | | |
| 242-tone RU | RU1 [-122:-2,2:122] | | | | |

### High Frequency OFDM Parameter Design

With regard to the current discussion on the design of OFDM parameters of the high frequency millimeter wave physical layer (PHY), the related art tends to multiplex existing low frequency radio frequency circuits (e.g. IEEE 802.11 ax/be).

In some embodiments, low-frequency OFDM parameters (e.g. parameters specified by IEEE 802.11 ax/be) may be multiplied by m to obtain high-frequency OFDM parameters. m can be referred to as a multiplication parameter. The value of m may be a positive integer. m may be equal to, for example, 2, 4 or 8.

For example, the bandwidth of the millimeter wave PHY can be obtained by multiplying m with the low frequency bandwidths of 20 MHz, 40 MHz, 80 MHz, 160 MHz, and 320 MHz. That is, the bandwidth of the millimeter wave PHY may be m * 20 MHz, m * 40 MHz, m * 80 MHz, m * 160 MHz, or m * 320 MHz. For another example, the subcarrier spacing of the millimeter wave PHY can be obtained by multiplying the subcarrier spacing in the low frequency by m. That is, for the data field, the subcarrier spacing of the millimeter wave PHY may be m * 78.125 kHz.

### Phase Noise (PN) Estimation

Phase noise is an important index of measuring the frequency stability quality of frequency standard sources (for example, a high stability crystal oscillator, an atomic frequency standard, etc.), and is also a modulation noise of a communication system. Phase noise is mainly caused by the nonlinear factors of local oscillation at the receiving end and the transmitting end. In the related art, phase noise is estimated or corrected by a phase noise reference signal (referred to as a reference signal for short) or a pilot subcarrier. For example, the phase noise is corrected by inserting the reference signal in the time domain in the related art. That is, the receiving terminal acquires, in a specific time period, a phase error of the input signal obtained after the reference signal is inserted, acquires a phase error of the original input signal in case that no reference signal is added, and performs linear interpolation between the two phase errors to obtain an phase offset of the phase noise, and corrects the phase noise according to the phase offset.

The effect of phase noise on the OFDM system can include two parts: common phase error (CPE) and inter-carrier interference (ICI). The CPE may cause all subcarriers to undergo the same phase deflection. The ICI refers to a random phase error between subcarriers, which destroys the orthogonality between the subcarriers.

The phase noise estimation and correction technology may include phase reference data assistance and decision data guidance. There are many problems in the phase noise estimation and correction technology.

The performance of phase reference data assistance technology is closely related to the type of the reference signal, the insertion density and position of the reference signal. Therefore, the accuracy of the phase noise estimation is determined based on the density and position of the reference signal. The reference signal may include the pilot subcarrier. Therefore, the accuracy of the phase noise estimation is highly dependent on the pilot subcarrier.

With the decision data guidance technology, the compensated signal is determined, and a phase noise estimation value is determined according to the determination result, which requires many iterations. Therefore, the algorithm complexity is high and the cost is high.

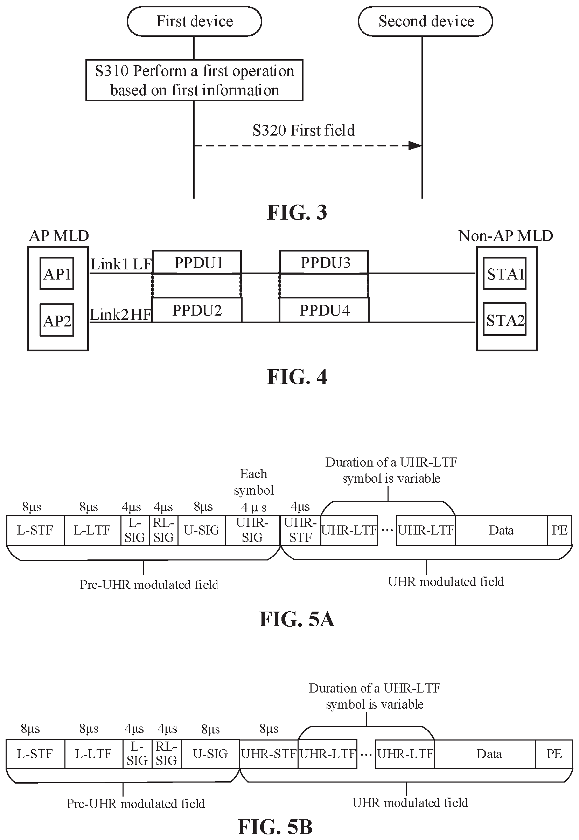

The embodiment of the present disclosure provides the method shown in FIG. 3 to solve the above problems.

The method shown in FIG. 3 may be performed by a first device.

The first device may receive and/or transmit signals over multiple links. That is, the first device may be an MLD. For example, the first device may be an AP MLD or a non-AP MLD.

The method shown in FIG. 3 may include operation S310.

In S310, the first device performs a first operation according to the first information.

As described above, the first device may receive signals over multiple links. That is, the first device may perform a multi-link operation (MLO). The multiple links may include, for example, a first link and a second link. The frequency of the first link may be lower than the frequency of the second link. Here, the frequency may refer to a channel center frequency. That is, the first link is a low-frequency link and the second link is a high-frequency link.

For example, the frequency of the first link may be sub-7 GHz. The frequency of the first link may be, for example, 5 GHz.

As another example, the frequency of the second link may be any value from 26.5 GHz to 300 GHz. That is, the second link may be a millimeter wave link. The frequency of the second link may be, for example, 60 GHz.

Exemplarily, the first link may be a link defined in IEEE 802.11 be.

It should be noted that, for MLO, since the transmission overhead of the high-frequency link is large and the transmission overhead of the low-frequency link is small, the low frequency link may always remain in the on state.

The first information may be related to phase noise information of the first link. For example, the first information may include one or more of a phase noise estimation result of the first link, or information for determining the phase noise estimation result of the first link.

The first operation may be related to phase noise of the second link. Therefore, the operation S310 can be understood as performing an operation related to the high-frequency phase noise based on the low-frequency phase noise.

Exemplarily, the first operation may include one or more of following operations: estimating phase noise of the second link, or correcting the phase based on the phase noise of the second link. It can be understood according to operation S310 that, the first device may perform estimation and/or correction on the high-frequency phase noise based on the low-frequency phase noise information. Therefore, the technical solution provided by the embodiment of the present disclosure may be referred to as a phase noise estimation and/or correction technology "low frequency compensation for high frequency".

As can be seen from the above, phase noise is caused by unsatisfactory factors in hardware of the system. Therefore, the phase noise increases as the channel center frequency increases. That is, high-frequency carrier OFDM is more susceptible to phase noise. Therefore, based on the estimation and/or correction solution for the high-frequency phase noise proposed in the present disclosure, the communication device can effectively reduce or avoid adverse effects of phase noise in the high-frequency link on high-frequency communication.

In addition, when high-frequency resources are introduced, there may be a network environment in which high and low frequency resources coexist. In one aspect, the present disclosure provides a technical solution for estimating phase noise of the high-frequency link under a high and low frequency multi-link operation framework. On the other hand, the high-frequency link has a fast data transmission rate, a high overhead and a short transmission distance, while the low-frequency link has a low data transmission rate, a low overhead and a long transmission distance. Through the present disclosure, the low frequency can compensate for the high frequency, so that the influence of phase noise on the high frequency band is reduced as much as possible, and fast and reliable data transmission can be realized. In another aspect, the phase noise is estimated at the receiving end in the low-frequency link by utilizing the relationship between the phase noise and the channel center frequency in the present disclosure, and estimation information is shared to the high-frequency link. The high-frequency link may utilize phase noise estimation information of the low-frequency link to estimate and/or compensate for phase noise of the high-frequency link at the receiving end. Therefore, in terms of computational complexity, the high-frequency link may not perform phase noise estimation and/or verification through the pilot reference signal, and thus may reduce the number of pilot subcarriers or not use pilot subcarriers in PPDU design, thereby increasing the number of data subcarriers. Based on this, the present disclosure can significantly reduce the consumption of computing resources and increase the effective utilization rate of spectrum resources.

When the first information includes the phase noise estimation result of the first link, the phase noise estimation result of the first link may be obtained based on the pilot subcarrier of the first link. That is, the phase noise estimation result of the first link may be determined by a related technology. For example, the first device may estimate the phase noise of the first link by the pilot phase tracking technology. Exemplarily, a signal such as a pilot subcarrier and channel state information (CSI) may be used as a reference signal to estimate phase noise.

In some embodiments, the phase noise may include a CPE. The inventors of the present disclosure have found that there is a corresponding numerical relationship between the CPE estimation information and the channel center frequency, and phase noise estimation of the data subcarrier on the high-frequency link can be performed in combination with CPE estimation information of the low-frequency link. It should be noted that this finding has also been verified by simulation.

In some embodiments, the carrier corresponding to the first link and the carrier corresponding to the second link share one crystal oscillator. In other words, the premise of the technical solution proposed in the present disclosure may include that the high-frequency carrier and the low-frequency carrier share one crystal oscillator. At present, one crystal oscillator is used for realizing dual-frequency in most of the chip manufacturers, so this disclosure can be applied to most devices.

In some embodiments, the first operation may be performed not only according to the first information, but also according to other information. The other information may include one or more of the following pieces of information: a channel bandwidth of the first link, a channel bandwidth of the second link, a channel center frequency of the first link, a channel center frequency of the second link, other OFDM-related parameters. Among them, the other OFDM-related parameters may include, for example, subcarrier spacing (SCS).

Hereinafter, how the first operation is performed based on the first information and/or other information is described in detail by way of example.

In some embodiments, the first information may be determined by a first PPDU transmitted by the first link, and the first operation may be related to phase noise of a second PPDU transmitted by the second link. For example, the first information may include, for example, a phase noise estimation result of a symbol of the first PPDU. The first operation may include, for example, estimating the phase noise of the symbol of the second PPDU and/or correcting the phase according to the phase noise of the symbol of the second PPDU.

As a possible embodiment, the first device may receive the first PPDU on the first link and receive the second PPDU on the second link. The first PPDU and the second PPDU may be transmitted simultaneously or received simultaneously. Also, the start time of the first PPDU is aligned with the start time of the second PPDU, and the end time of the first PPDU is aligned with the end time of the second PPDU. The first device may perform phase tracking by using the pilot subcarrier in the first PPDU, perform phase noise estimation on an OFDM symbol of the first PPDU, to obtain the phase noise estimation result. The first device may determine a phase noise estimation result of an OFDM symbol of the second PPDU according to the phase noise estimation result of the OFDM symbol of the first PPDU.

Description is given hereinafter by the scenario illustrated in FIG. 4. As shown in FIG. 4, the AP MLD includes AP1 and AP2, and the non-AP MLD includes STA1 and STA2. PPDU1 and PPDU3 are transmitted over a first link (represented as link 1 in FIG. 4). The first link is a low frequency link. A second link is a high frequency link. The PPDU2 and the PPDU4 are transmitted through the second link (represented as link 2 in FIG. 4). In case where the AP MLD transmits a PPDU to the non-AP MLD, the first PPDU may be PPDU1 or PPDU3 in FIG. 4, and the second PPDU may be PPDU2 or PPDU4 in FIG. 4. In case where the non-AP MLD transmits a PPDU to the AP MLD, the first PPDU may be PPDU2 or PPDU4 in FIG. 4, and the second PPDU may be PPDU1 or PPDU3 in FIG. 4. As shown in FIG. 4, PPDU1 and PPDU2 are transmitted simultaneously, and PPDU3 and PPDU4 are transmitted simultaneously. The first device may determine the phase noise estimation result of the OFDM symbol of the PPDU2 based on the phase noise estimation result of the OFDM symbol of the PPDU1. The first device may determine the phase noise estimation result of the OFDM symbol of the PPDU 4 based on the phase noise estimation result of the OFDM symbol of the PPDU 3.

In some embodiments, the first operation may include determining a first matrix of the second link. The first matrix may be related to a phase noise reference matrix of the second link.

For example, the first information may include a phase noise reference matrix of the first link, and the first matrix may include the phase noise reference matrix of the second link. That is, the phase noise reference matrix of the second link can be directly calculated from the phase noise reference matrix of the first link.

As another example, the first information may include a phase noise reference matrix of the first link. The first matrix may be calculated from the phase noise reference matrix of the first link, and the phase noise reference matrix of the second link is calculated from the first matrix. That is, the phase noise reference matrix of the second link can be obtained indirectly by calculating the first matrix.

Exemplarily, the first matrix may satisfy ${CPE}_{HF} = {CPE}_{LF} ∗ \left(a\frac{{fc}_{high}}{{fc}_{low}}+b\right) + c .$. Here, CPE_{HF} may represent a first matrix, CPE_{LF} may represent a phase noise reference matrix of the first link, a may be related to a channel bandwidth of the first link and/or a channel bandwidth of the second link, b and c may be other parameters affecting phase noise, fc_{low} represents a frequency of the first link, and fc_{high} represents a frequency of the second link.

Optionally, a may satisfy: $a = \frac{{BW}_{HF}}{{BW}_{LF} ∗ m}$, where BW_{LF} may represent a channel bandwidth of the first link, BW_{HF} may represent a channel bandwidth of the second link, and m is a multiplication parameter. The value of m can be a positive number.

b and c may be other parameters that affect the phase noise estimation. Other parameters affecting the phase noise estimation may be any parameter capable of affecting the phase noise estimation, which is not limited in the present disclosure. Other parameters affecting phase noise estimation may include, for example, channel state information, a training field, and the like.

b or c may be any value. For example, b or c may be an integer, a negative number, or 0. For example, if b = c = 0, then ${CPE}_{HF} = {CPE}_{LF} ∗ \left(a\frac{{fc}_{high}}{{fc}_{low}}\right)$, that is, the first matrix may be calculated by only considering the influence of the channel center frequency and the channel bandwidth on the phase noise, without considering other factors.

The duration of the symbol (e.g., OFDM symbol) of the second link may be different from the duration of the symbol of the first link. The phase noise estimation results may have one-to-one correspondences with to the symbols. Therefore, the number of symbols corresponding to the phase noise estimation result of the first link may be different from the number of symbols corresponding to the phase noise estimation result of the second link. Therefore, it is necessary to process the phase noise estimation result of the first link to obtain the phase noise estimation result of each symbol of the second link.

In some embodiments, the phase noise of multiple symbols of the second link may all be obtained by the phase noise estimation result of one symbol of the first link. For example, the phase noise reference matrix of the second link may be obtained by repeating a part or all of elements in the first matrix.

Optionally, the phase noise estimation results of the symbol of the n second links may be obtained by the phase noise estimation result of the same symbol of the first link. n may satisfy: $n = \frac{{T}_{SYM , LF}}{{T}_{SYM , HF}}$. T_{SYM,LF} and T_{SYM,HF} represent the duration of the OFDM symbol of the first link and the duration of the OFDM symbol of the second link, respectively. For example, n = 4, 8, 16 or 32.

Exemplarily, the phase noise estimation result of the second link may satisfy one or more of the following: the phase noise estimation results of the first to nth symbols of the second link may be obtained by the phase noise estimation result of the first symbol of the first link; the phase noise estimation results of the (n+1)th to (2n)-th symbols of the second link can be obtained by the phase noise estimation result of the second symbol of the first link; and the phase noise estimation result of the (2n+1)-th to 3nth symbols of the second link can be obtained by the phase noise estimation result of the third symbol of the first link, and so on.

Description is given hereinafter by the example shown in Table 2. Table 2 shows CPE results for an OFDM symbol of a first link with 5 GHz.

**Table 2**

| Symbol 1 | Symbol 2 | Symbol 3 | Symbol 4 | Symbol 5 | Symbol 6 |
|---|---|---|---|---|---|
| -0.0136 rad | -0.0159 rad | -0.0306 rad | -0.0291 rad | -0.0340 rad | -0.0379 rad |

Hereinafter, description is given with a case that the first matrix satisfies CPE_{HF} = 12CPE_{LF} as an example. If the second link is 60 GHz, n = 4. A CPE estimation result for the OFDM symbol of the second link may be shown in Table 3.

**Table 3**

| Sym bol index | High frequency symbol 1 (Correspon ding to low frequency symbol 1) | High frequency symbol 2 | High frequency symbol 3 | High frequency symbol 4 | High frequency symbol 5 (Correspon ding to low frequency symbol 2) | High frequency symbol 6 | High frequency symbol 7 | High frequency symbol 8 |
|---|---|---|---|---|---|---|---|---|
| CPE | -0.1632rad | -0.1632 rad | -0.1632 rad | -0.1632 rad | -0.1908rad | -0.1908 rad | -0.1908 rad | -0.1908 rad |

| Symbol index | High frequency symbol 9 (Correspon ding to low frequency symbol 3) | High frequency symbol 10 | High frequency symbol 11 | High frequency symbol 12 | High frequency symbol 13 (Correspon ding to low frequency symbol 4) | High frequency symbol 14 | High frequency symbol 15 | High frequency symbol 16 |
|---|---|---|---|---|---|---|---|---|
| CPE | -0.3672rad | -0.3672 rad | -0.3672 rad | -0.3672 rad | -0.3492rad | -0.3492 rad | -0.3492 rad | -0.3492 rad |

| Symbol index | High frequency symbol 17 (Corresponding to low frequency symbol 5) | High frequency symbol 18 | High frequency symbol 19 | High frequency symbol 20 | High frequency symbol 21 (Correspon ding to low frequency symbol 6) | High frequency symbol 22 | High frequency symbol 23 | High frequency symbol 24 |
|---|---|---|---|---|---|---|---|---|
| CPE | -0.4080rad | -0.4080 rad | -0.4080 rad | -0.4080 rad | -0.4548rad | -0.4548 rad | -0.4548 rad | -0.4548 rad |

As can be seen from Table 3, the symbol (represented as "High frequency symbol" in Table 3) 1 to symbol 4 of the second link have identical CPEs, and the CPEs are all obtained by multiplying the CPE of symbol (represented as "low frequency symbol" in Table 3) 1 of the first link by 12. The symbols 5 to 8 of the second link have identical CPEs, and the CPEs are all obtained by multiplying the CPE of symbol 2 of the first link by 12. The symbol 9 to symbol 12 of the second link have identical CPEs, and the CPEs are all obtained by multiplying the CPE of symbol 3 of the first link by 12. The symbols 13 to 16 of the second link have identical CPEs, and the CPEs are all obtained by multiplying the CPE of symbol 4 of the first link by 12. The symbols 17 to 20 of the second link have identical CPEs, and the CPEs are all obtained by multiplying the CPE of symbol 5 of the first link by 12. The CPEs of symbols 21 to 24 of the second link have identical CPEs, and the CPEs are all obtained by multiplying the CPE of symbol 6 of the first link by 12.

In some embodiments, the phase noise of a certain symbol of the second link may be obtained by interpolating phase noise estimation results of multiple symbols of the first link. For example, the phase noise reference matrix of the second link may be obtained by interpolating the first matrix.

It should be noted that the interpolation algorithm used for interpolation is not limited in the present disclosure. For example, the interpolation algorithm may include linear interpolation.

Alternatively, the number of interpolations may be, for example, (n-1). That is, by the interpolation algorithm, (n-1) values can be interpolated to the phase noise estimation results of two symbols of the first link, and the phase noise estimation result of each symbol of the second link can be obtained from the interpolated phase noise estimation results. Here, n may satisfy: $n = \frac{{T}_{SYM , LF}}{{T}_{SYM , HF}}$. T_{SYM,LF} and T_{SYM,HF} represent the duration of the OFDM symbol of the first link and the duration of the OFDM symbol of the second link, respectively. For example, n = 4, 8, 16 or 32.

Description is given hereinafter based on Table 2 with taking a case that the first matrix satisfies CPE_{HF} = 12CPE_{LF} as an example. If the second link is 60 GHz, n = 4. Another CPE estimation result for the OFDM symbol of the second link may be as shown in Table 4.

**Table 4**

| Symbol index | High frequency symbol 1 (Corresponding to low frequency symbol 1) | High frequency symbol 2 | High frequency symbol 3 | High frequency symbol 4 | High frequency symbol 5 (Corresponding to low frequency symbol 2) | High frequency symbol 6 | High frequency symbol 7 | High frequency symbol 8 |
|---|---|---|---|---|---|---|---|---|
| CPE | -0.1632ra d | -0.1692r ad | -0.1752r ad | -0.18 12rad | -0.1908rad | -0.2061r ad | -0.2445r ad | -0.282 8rad |

| Symbol index | High frequency symbol 9 (Corresponding to low frequency symbol 3) | High frequency symbol 10 | High frequency symbol 11 | High frequency symbol 12 | High frequency symbol 13 (Correspon ding to low frequency symbol 4) | High frequency symbol 14 | High frequency symbol 15 | High frequency symbol 16 |
|---|---|---|---|---|---|---|---|---|
| CPE | -0.3672ra d | -0.3595r ad | -0.3641r ad | -0.36 02rad | -0.3492rad | -0.3523 rad | -0.3518 rad | -0.364 5rad |

| Symbol index | High frequency symbol 17 (Corresponding to low frequency symbol 5) | High frequency symbol 18 | High frequency symbol 19 | High frequency symbol 20 | High frequency symbol 21 (Correspon ding to low frequency symbol 6) | High frequency symbol 22 | High frequency symbol 23 | High frequency symbol 24 |
|---|---|---|---|---|---|---|---|---|
| CPE | -0.4080rad | -0.3091rad | -0.4029rad | -0.41 41rad | -0.4548rad | -0.4243rad | -0.4345rad | -0.4446rad |

As can be seen from Table 3, CPE of the symbol (represented as "High frequency symbol" in Table 4) 1 of the second link = 12× CPE of the symbol (represented as "Low frequency symbol" in Table 3) 1 of the first link. CPE of symbol 5 of the second link = 12× CPE of symbol 2 of the first link. CPE of symbol 9 of the second link = 12× CPE of symbol 3 of the first link. CPE of symbol 13 of the second link = 12× CPE of symbol 4 of the first link. CPE of symbol 17 of the second link = 12× CPE of symbol 5 of the first link. CPE of symbol 21 of the second link = 12× CPE of symbol 6 of the first link. CPE of other symbols of the second link is obtained by performing interpolation calculation based on the determined CPEs of symbol 1, symbol 5, symbol 9, symbol 13, symbol 17 and symbol 21.

In some embodiments, a waveform transmitted by the second link may be stored by the first device to correct the phase by using the first information. Accordingly, the first device may set a larger buffer space than phase correction by using the pilot subcarrier, to store the waveform transmitted by the second link.

In order to facilitate understanding, the technical solution of "low frequency compensation for high frequency" proposed in the present disclosure is described below with reference to Embodiment 1.

### Embodiment 1

The method provided by Embodiment 1 may be performed by a first device and a second device. The first device is a non-AP MLD. The second device is an AP MLD. The first link is a 5 GHz link (denoted by "low frequency link 1") and the second link is a 60 GHz link (denoted by "high frequency link 2"). Embodiment 1 may include operations S1-S4.

In operation S1, the AP MLD simultaneously transmits PPDUs on the low frequency link 1 and the high frequency link 2.

In operation S2, the non-AP MLD receives the PPDU transmitted by the low-frequency link 1, performs CPE estimation by using the pilot phase tracking algorithm, and obtains the CPEs of a part of OFDM symbols of the PPDU in the low-frequency link 1, as shown in Table 2.

In operation S3, the non-AP MLD transmits the CPE results estimated by the low-frequency link 1 to the high-frequency link 2. A high-frequency CPE reference matrix (that is, the first matrix) based on low-frequency assistance is obtained according to the CPE results estimated in the low frequency, a channel bandwidth of the high-frequency link 2 and the formula ${CPE}_{HF} = {CPE}_{LF} ∗ \left(a\frac{{fc}_{high}}{{fc}_{low}}+b\right) + c . {fc}_{high} = 60 GHz$ , fc_{low} = 5GHz. Since a low frequency 20 MHz corresponds to a high frequency 160 MHz, $a = \frac{160 MHz}{20 MHz ∗ 8}$. Only the influence of the channel center frequency and the channel bandwidth on phase noise is considered, b = 0, c = 0. Therefore, the obtained high-frequency CPE estimation result is represented as CPE_{HF} = 12CPE_{LF}.

In Embodiment 1, the duration of the low-frequency OFDM symbol is 4 times of the duration of the high-frequency OFDM symbol, that is, n = 4. The number of interpolations is n-1=3. Based on this, through interpolation, the CPE of the OFDM symbol in the high-frequency 60GHz PPDU calculated based on the low frequency is as shown in Table 4.

In operation S4, the non-AP MLD compensates for the high-frequency OFDM symbol according to the CPE in Table 4.

The present disclosure also proposes a tone plan for the PHY of the second link.

In some embodiments, when the channel bandwidth of the second link is m × M, the tone plan of the second link may correspond to the tone plan of the channel bandwidth M. m is a multiplication parameter.

The terms "Correspond" may mean that a part of parameters or plans in the tone plans are the same, or, the tone plan of the second link is determined based on the tone plan having a channel bandwidth M.

For example, when the bandwidth of the second link is m*20 MHz, m*40 MHz, m*80 MHz, m*160 MHz, or m*320 MHz, the second link corresponds to a tone plan of the first link having a bandwidth of 20 MHz, 40 MHz, 80 MHz, 160 MHz, or 320 MHz, respectively.

For example, the tone plan of the second link may have the same number of RUs of the same type. Taking the multiplication parameters m = 8 and M = 20 MHz as an example, the second link having a bandwidth of m × M = 160 MHz may have nine 26-tone RUs, four 52-tone RUs, two 106-tone RUs, or one 242-tone RU. For example, a schematic diagram of the RU locates of the PPDU of the channel bandwidth 160 MHz may be as shown in FIG. 2.

As another example, the tone plan of the second link may have the same index and the same subcarrier range of RUs in the same type. Taking the multiplication parameters m = 8 and M = 20 MHz as an example, the RU index and the subcarrier range of the second link having a bandwidth of m × M = 160 MHz may be partially or entirely the same as those shown in Table 1.

In some embodiments, the number of pilot subcarriers in a subcarrier resource unit of a first type is a first number in the tone plan of the second link, and the number of pilot subcarriers in the subcarrier resource unit of the first type is a second number in the tone plan of the channel bandwidth M, and the first number is less than the second number. The first number may be an integer greater than or equal to 0, and the second number may be an integer greater than 0. That is, the number of high-frequency pilot subcarriers may be appropriately reduced or deleted.

Based on the present disclosure, phase noise estimation and/or correction can be implemented by the method "low frequency compensation for high frequency". That is, the present disclosure may implement phase noise estimation and/or correction without depending on the high-frequency pilot subcarriers. Therefore, the decreased number of high-frequency pilot subcarriers does not affect the accuracy of phase noise estimation. In addition, the reduced or deleted pilot subcarriers may be data subcarriers, thereby improving the transmission throughput.

For example, when the channel bandwidth of the second link is m*20 MHz, m*40 MHz, m*80 MHz, m*160 MHz, or m*320 MHz, the number of data subcarriers in the 26-tone RU may be 26-p1, and the number of pilot subcarriers in the 26-tone RU may be p1, and p1 is an integer less than 2.

Note that p1 may be 0. That is, the number of pilot subcarriers in the 26-tone RU may be 0, and the number of data subcarriers in the 26-tone RU may be 26.

For another example, when the channel bandwidth of the second link is m*20 MHz, m*40 MHz, m*80 MHz, m*160 MHz, or m*320 MHz, the number of data subcarriers in the 52-tone RU is 52-p2, the number of pilot subcarriers in the 52-tone RU is p2, and p2 is an integer less than 4, and p2 may be 0.

Note that p2 may be 0. That is, the number of pilot subcarriers in the 52-tone RU may be 0, and the number of data subcarriers in the 52-tone RU may be 52.

For another example, when the channel bandwidth of the second link is m*20 MHz, m*40 MHz, m*80 MHz, m*160 MHz, or m*320 MHz, the number of data subcarriers in the 106-tone RU may be 106-p3, the number of pilot subcarriers in the 106-tone RU may be p3, and p3 is an integer less than 4, and p3 may be 0.

Note that p3 may be 0. That is, the number of pilot subcarriers in the 106-tone RU may be 0, and the number of data subcarriers in the 106-tone RU may be 106.

For another example, when the channel bandwidth of the second link is m*20 MHz, m*40 MHz, m*80 MHz, m*160 MHz or m*320 MHz, the number of data subcarriers of the 242-tone RU may be 242-p4, the number of pilot subcarriers in the 242-tone RU may be p4, and p4 is an integer less than 8, and p4 may be 0.

Note that p4 may be 0. That is, the number of pilot subcarriers in the 242-tone RU may be 0, and the number of data subcarriers in the 242-tone RU may be 242.

For another example, when the channel bandwidth of the second link is m*40 MHz, m*80 MHz, m*160 MHz, or m*320 MHz, the number of data subcarriers in the 484-tone RU may be 484-p5, the number of pilot subcarriers in the 484-tone RU may be p5, and p5 is an integer less than 16, and p5 may be 0.

Note that p5 may be 0. That is, the number of pilot subcarriers in the 484-tone RU may be 0, and the number of data subcarriers in the 484-tone RU may be 484.

For another example, when the channel bandwidth of the second link is m*80 MHz, m*160 MHz, or m*320 MHz, the number of data subcarriers in the 996-tone RU may be 996-p6, the number of pilot subcarriers in the 996-tone RU may be p6, and p6 is an integer less than 16, and p6 may be 0.

Note that p6 may be 0. That is, the number of pilot subcarriers in the 996-tone RU may be 0, and the number of data subcarriers in the 996-tone RU may be 996.

For another example, when the channel bandwidth of the second link is m*160 MHz or m*320 MHz, the number of data subcarriers in the 2*996-tone RUs may be 2*996-p7, the number of pilot subcarriers in the 2*996-tone RUs may be p7, and p7 is an integer less than 32, and p7 may be 0.

Note that p7 may be 0. That is, the number of pilot subcarriers in the 2*996-tone RUs may be 0, and the number of data subcarriers in the 2*996-tone RUs may be 2*996.

For another example, when the channel bandwidth of the second link is m*320 MHz, the number of data subcarriers in the 4*996-tone RUs may be 4*996-p8, the number of pilot subcarriers in the 4*996-tone RUs may be p8, and p8 is an integer less than 64, and p8 may be 0.

Note that p8 may be 0. That is, the number of pilot subcarriers in the 4*996-tone RUs may be 0, and the number of data subcarriers in the 4*996-tone RUs may be 4*996.

The method shown in FIG. 3 may also be performed by a second device. The second device may be an MLD in communication with the first device. Exemplarily, the second device may include an AP MLD or a non-AP MLD. For example, the first device may be an AP MLD and the second device may be a non-AP MLD. As another example, the first device may be a non-AP MLD, and the second device may be an AP MLD. As another example, the first device and the second device each may be a non-AP MLD.

The method shown in FIG. 3 may further include operation S320.

In operation S320, the first device transmits a first field to the second device.

In some embodiments, the first field may indicate whether the first device performs the first operation according to the first information. That is, the first field may indicate whether the first device performs phase noise estimation and/or correction using the technical solution "low frequency compensation for high frequency" provided in the present disclosure.

The manner of indicating the first field is not limited in the present disclosure. Exemplarily, the first field may include a first bit. For example, if the value of the first bit is 0, the first bit may indicate that the first device performs the first operation according to the first information. If the value of the first bit is 1, the first bit may indicate that the first device does not perform the first operation according to the first information. Alternatively, if the value of the first bit is 1, the first bit may indicate that the first device performs the first operation according to the first information, and if the value of the first bit is 0, the first bit may indicate that the first device does not perform the first operation according to the first information.

It should be noted that, if the first device does not perform the first operation according to the first information, the first device may perform the first operation based on the pilot subcarrier. That is, the first device performs phase noise estimation by using the phase noise estimation algorithm based on the pilot subcarrier in the related art, or based on other algorithms, which is not limited in the present disclosure.

In some embodiments, the first field may indicate a tone plan for the second link.

Optionally, the first field may indicate whether the first device uses the tone plan provided by the embodiment of the present disclosure. For example, the first field may indicate whether the tone plan of the second link corresponds to a tone plan for a channel bandwidth M. As another example, the first field may indicate whether the first number is less than the second number.

Exemplarily, the first field may include a second bit. For example, if the value of the second bit is 0, the second bit may indicate that the first device uses the tone plan provided by the embodiment of the present disclosure. If the value of the second bit is 1, the second bit may indicate that the first device does not use the tone plan provided by the embodiment of the present disclosure. Alternatively, if the value of the second bit is 1, the second bit may indicate that the first device uses the tone plan provided by the embodiment of the present disclosure. If the value of the second bit is 0, the second bit may indicate that the first device does not use the tone plan provided by the embodiment of the present disclosure.

Exemplarily, the first field may include a third bit. For example, if the value of the third bit is 0, the first number is smaller than the second number, and if the value of the third bit is 1, the first number is not less than the second number. Alternatively, if the value of the third bit is 1, the first number is less than the second number, and if the value of the third bit is 0, the first number is not less than the second number.

In some embodiments, the first field may also be referred to as a PN estimation mode field or the like in consideration of the contents indicated by the first field.

In some embodiments, the first field may be located in a preamble of the PPDU. Hereinafter, the first field is located in the preamble of the UHR PPDU as an example.

The UHR PPDU may include two formats: UHR MU PPDU and UHR TB PPDU.

The UHR MU PPDU format may be used to transmit a signal to one or more users. FIG. 5A is an example diagram of a UHR MU PPDU format. As shown in FIG. 5A, the UHR MU PPDU may include a legacy short training field (L-STF), a legacy long training field (L-LTF), a legacy signal filed (L-SIG), a repeated legacy signal field (RL-SIG), a universal signal field (U-SIG), an ultra-high reliability signal field (UHR-SIG), an ultra-high reliability short training field (UHR-STF), an ultra-high reliability long training field (UHR-LTF), data, and a packet extension field (PE).

As shown in FIG. 5A, the L-STF, the L-LTF, the L-SIG, the RL-SIG, the U-SIG and the UHR-SIG in the UHR MU PPDU may be referred to as pre-UHR modulated fields. The UHR-STF, the UHR-LTF, the data, and the PE fields in the UHR MU PPDU may be referred to as UHR modulated fields.

The UHR TB PPDU format may be used for transmission in response to a trigger frame from the AP. FIG. 5B is an example diagram of a UHR TB PPDU format. As shown in FIG. 5B, the UHR TB PPDU may include an L-STF, an L-LTF, an L-SIG, an RL-SIG, a U-SIG, a UHR-STF, a UHR-LTF, a data, and a PE.

As shown in FIG. 5B, the L-STF, the L-LTF, the L-SIG, the RL-SIG and the U-SIG fields in the UHR TB PPDU may be referred to as pre-UHR modulated fields. The UHR-STF, the UHR-LTF, the Data and the PE fields in the UHR TB PPDU are referred to as UHR modulated fields.

The duration of the UHR-STF in the UHR TB PPDU may be twice of the duration of the UHR-STF in the UHR MU PPDU. Each UHR-LTF symbol in the UHR PPDU may have the same guard interval (GI) duration as each data symbol. For example, the GI duration may be 0.8 µs, 1.6 µs or 3.2 µs, respectively. The UHR-LTF symbols included in the UHR-LTF may include three types: 1x UHR-LTF symbols, 2x UHR-LTF symbols and 4x UHR-LTF symbols. The duration except for the GI of each 1x UHR-LTF symbol, 2x UHR-LTF symbol, and 4x UHR-LTF symbol may be 3.2 µs, 6.4 µs, and 12.8 µs, respectively. The data symbol except for GI may be 12.8 µs.

In some embodiments, the first field may be located in a signal (SIG) field of the preamble. The signal field may be included in, for example, the U-SIG and/or the UHR-SIG.

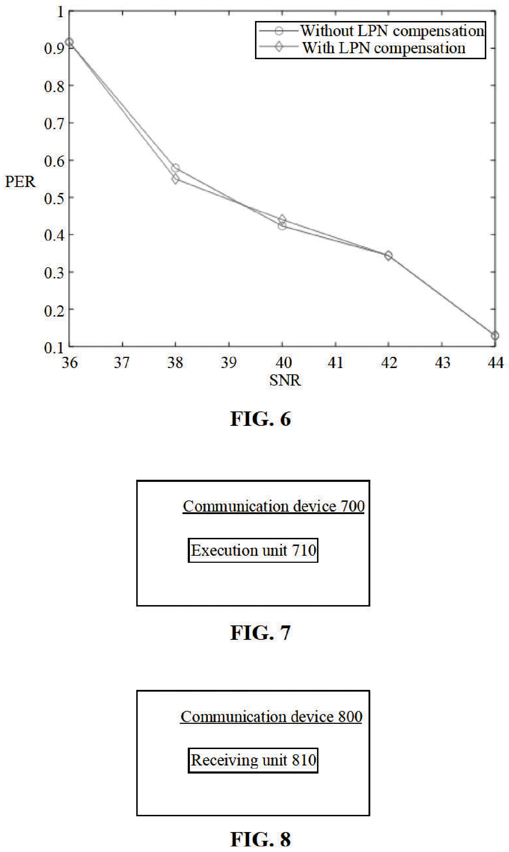

FIG. 6 is a schematic diagram illustrating a packet error rate (PER) simulation of the technical solution "low frequency compensation for high frequency" according to the embodiment of the present disclosure. In FIG. 6, MCS = 13, fc_{high} = 6GHz, fc_{low} 5GHz, BW_{HF} = 20MHz, BW_{LF} = 20MHz. With the same channel model, CPE estimation information of a low channel center frequency is first calculated, and CPE estimation information of a high channel center frequency is then obtained according to the method provided in the present disclosure when phase correction for the high channel center frequency is performed, and the CPE estimation information is applied to the phase noise correction method for the high frequency symbol.

In FIG. 6, the curve "without LPN compensation" denotes a packet error rate curve (which is obtained using for example a pilot phase tracking technique rather than the technical solution provided in the present disclosure) of a high frequency symbol after phase noise estimation and correction is directly performed, and the curve "with LPN compensation" denotes a packet error rate curve obtained by using phase noise correction for the high frequency symbol provided in the embodiment of the present disclosure. From the observation results shown in FIG. 6, it can be seen that the solution proposed in the present disclosure is effective, and the estimation accuracy is more accurate for a larger signal to noise ratio (SNR). There are many factors that affect the packet error rate, and accurate phase noise estimation and correction is only a small factor, so the influence of phase noise on the packet error rate is not a decisive role, and the technical solution proposed in present disclosure can obtain the approximately same packet error rate, which proves the effectiveness of the low frequency compensation for high frequency algorithm.

The method embodiment of the present disclosure has been described in detail above, and a device embodiment of the present disclosure is described in detail below. It should be understood that the description of the method embodiment corresponds to the description of the device embodiment, and regarding the portions not described in detail, reference can be made to the foregoing method embodiment.

FIG. 7 is a schematic structural diagram of a communication device 700 according to an embodiment of the present disclosure. The communication device 700 may be a first device. The communication device 700 may include an execution unit 710.

The execution unit 710 may be configured to execute a first operation according to the first information. The first device receives a signal through a first link and a second link, a channel center frequency of the first link is lower than a channel center frequency of the second link, the first information is related to phase noise information of the first link, and the first operation is related to phase noise of the second link.

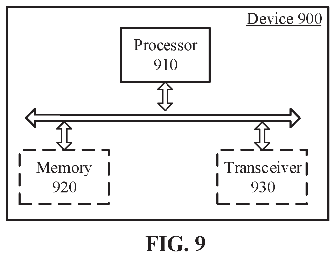

In an alternative embodiment, the execution unit 710 may be a processor 910. The communication device 700 may further include a memory 920 and a transceiver 930, as shown in FIG. 9.

FIG. 8 is a schematic structural diagram of a communication device 800 according to an embodiment of the present disclosure. The communication device 800 may be a second device. The communication device 800 may include a receiving unit 810.

The receiving unit 810 may be configured to receive a first field transmitted by the first device. The first device receives a signal through a first link and a second link, a channel center frequency of the first link is lower than a channel center frequency of the second link, the first information is related to phase noise information of the first link, and the first operation is related to phase noise of the second link. The first field indicates one or more of the following pieces of information: whether the first device performs a first operation according to the first information; and a tone plan of the second link.

In an alternative embodiment, the receiving unit 810 may be a transceiver 930. The communication device 800 may further include a processor 910 and a memory 920, as specifically shown in FIG. 9.

FIG. 9 is a schematic structural diagram of a communication device according to an embodiment of the present disclosure. The dashed line in FIG. 9 indicates that the unit or module is optional. The device 900 may be used to implement the method described in the method embodiment described above. The device 900 may be a chip or a communication device.

The device 900 may include one or more processors 910. The processor 910 may enable the device 900 to implement the method described in the above method embodiment. The processor 910 may be a general-purpose processor or a special-purpose processor. For example, the processor may be a central processing unit (CPU). Alternatively, the processor may also be another general-purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor, or the processor may be any conventional processor or the like.

The device 900 may further include one or more memories 920. The memory 920 has stored a program thereon that can be executed by the processor 910 to cause the processor 910 to perform the method described in the above method embodiment. The memory 920 may be independent of the processor 910 or may be integrated into the processor 910.

The device 900 may further include a transceiver 930. The processor 910 may communicate with other devices or chips through the transceiver 930. For example, the processor 910 may transmit and receive data with other devices or chips through the transceiver 930.

The embodiments of the present disclosure further provide a computer-readable storage medium for storing a program. The computer-readable storage medium can be applied to the communication device provided by the embodiment of the present disclosure, and the program causes the computer to execute the method executed by the communication device in the respective embodiments of the present disclosure.

The embodiments of the present disclosure further provide a computer program product. The computer program product includes a program. The computer program product can be applied to the communication device provided by the embodiment of the present disclosure, and the program causes the computer to execute the method executed by the communication device in the respective embodiments of the present disclosure.

The embodiments of the present disclosure further provide a computer program. The computer program can be applied to the communication device provided by the embodiment of the present disclosure, and the computer program causes the computer to execute the method executed by the communication device in the respective embodiments of the present disclosure.

It is to be understood that the terms "system" and "network" may be used interchangeably in the present disclosure. In addition, the terms used in the present disclosure is used for explanation of specific embodiments of the present disclosure only, and is not intended to limit the present disclosure. The terms "first," "second," "third," and "fourth," etc. in the specification, claims and the accompanying drawings of the present disclosure are used to distinguish different objects, and are not used to describe a specific order. Furthermore, the terms "comprising" and "having" and any variations thereof are intended to cover non-exclusive inclusions.

In the embodiments of the present disclosure, a "field" may also be referred to as a "field", a "subfield", or a "subfield". A field may occupy one or more bytes (byte/octet), or alternatively, a field may occupy one or more bits (bits).

In the embodiments of the present disclosure, the "indication" mentioned may be a direct indication, an indirect indication or an associated relationship. For example, A indicates B, which may mean that A directly indicates B, for example, B can be acquired by A, or may mean that A indicates B indirectly, for example, A indicates C, and B can be obtained through C, or may mean that there is an association relationship between A and B.

In an embodiment of the present disclosure, "B corresponding to A" means that B is associated with A, and B can be determined from A. However, it should also be understood that determining B from A does not mean that B is determined from A alone, and may mean that B may also be determined from A and/or other information.

In the embodiments of the present disclosure, the term "correspondence" may mean that there is a direct correspondence or indirect correspondence between the two objects, may mean that there is an association relationship between the two objects, or a relationship between indicating and being instructed, configuring and being configured, or the like.

In the embodiment of the present disclosure, the "predefined" or "preconfigured" may be realized by storing corresponding codes, tables, or other manners that may indicate relevant information in advance in the device (including, for example, an AP and an STA), and how to implement the "predefined" or "preconfigured" is not limited in the present disclosure. For example, the "predefined" may refer to defining in the protocol.

The term "and/or" in the embodiment of the present disclosure is only an association relationship describing associated objects, and indicates that there may be three relationships, for example, A and/or B, which may mean that A exists alone, A and B exist simultaneously, and B exists alone. In addition, the character "/" herein generally indicates that the related objects before and after are in an "or" relationship.

In the embodiments of the present disclosure, the "include" may refer to directly including or indirectly including. Alternatively, the "include" in the embodiments of the present disclosure may be replaced with "indicating" or "for determining". For example, A including B may be replaced with A indicating B, or A being used to determine B.

In various embodiments of the present disclosure, the sequence numbers of the above-described processes do not mean the sequence of execution, and the sequence of execution of each process should be determined by its function and internal logic, and should not constitute any limitation on the implementation of the embodiments of the present disclosure.

In the embodiment of the present disclosure, the "protocol" may refer to a standard protocol in the field of communication, and may include, for example, the Wi-Fi protocol and related protocols applied to a future Wi-Fi communication system, which is not limited in the present disclosure.

In several embodiments provided herein, it should be understood that the disclosed systems, devices and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or a communication connection shown or discussed may be an indirect coupling or communication connection through some interfaces, devices or units, which may be electrical, mechanical or otherwise.

The units described as separate components may or may not be physically separate, and the components displayed as units may be or may not be physical units, that is, the components may be located in one place or may be distributed over a plurality of network units. Some or all of the units may be selected according to actual needs to achieve the purpose of the solution of the present embodiment.

In addition, the functional units in each embodiment of the present disclosure may be integrated in one processing unit, each unit may be physically present alone, or two or more units may be integrated into one unit.

The above embodiments described above may be implemented in whole or in part by software, hardware, firmware, or any combination thereof. When implemented using software, the above embodiments may be implemented in whole or in part in the form of a computer program product. The computer program product includes one or more computer instructions. When the computer program instructions are loaded and executed on a computer, the processes or functions described in accordance with the embodiments of the present disclosure are generated in whole or in part. The computer may be a general-purpose computer, a special-purpose computer, a computer network, or other programmable device. The computer instructions may be stored in a computer-readable storage medium or transmitted from one computer-readable storage medium to another computer-readable storage medium, for example, the computer instructions may be transmitted from a website site, a computer, a server, or a data center by wired (e.g., a coaxial cable, an optical fiber, a digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that includes one or more available media integrations. The available media may be a magnetic media (e.g., a floppy disk, a hard disk, a magnetic tape), an optical media (e.g., a digital video disc (DVD)), or a semiconductor media (e.g., a solid-state disk (SSD)), etc.

The foregoing is merely a specific embodiment of the present disclosure, but the scope of protection of the present disclosure is not limited thereto, and changes or substitutions easily conceived by any person skilled in the art within the technical scope disclosed in the present disclosure should fall within the scope of protection of the present disclosure. Therefore, the scope of protection of the present disclosure should conform with the scope of protection of the claims.

## Claims

1. A communication method, comprising:
performing, by a first device, a first operation according to first information,
wherein the first device receives a signal over a first link and a second link, a channel center frequency of the first link is lower than a channel center frequency of the second link, the first information is related to phase noise information of the first link, and the first operation is related to phase noise of the second link.

2. The method of claim 1, wherein a carrier corresponding to the first link and a carrier corresponding to the second link share a crystal oscillator.

3. The method of claim 1 or 2, wherein the first operation comprises one or more of:
estimating the phase noise of the second link; or
correcting a phase based on the phase noise of the second link.

4. The method of claim 3, wherein the estimating phase noise of the second link comprises: determining a first matrix of the second link,
wherein the first matrix is related to a phase noise reference matrix of the second link.

5. The method of claim 4, wherein the first matrix satisfies: ${CPE}_{HF} = {CPE}_{LF} ∗ \left(a\frac{{fc}_{high}}{{fc}_{low}}+b\right) + c ;$ wherein CPE_{HF} represents the first matrix, CPE_{LF} represents a phase noise reference matrix of the first link, a is related to a channel bandwidth of the first link and/or a channel bandwidth of the second link, b and c denote other parameters affecting phase noise estimation, fc_{low} represents the channel center frequency of the first link, and fc_{high} represents the channel center frequency of the second link.

6. The method of claim 4 or 5, wherein
a satisfies: $a = \frac{{BW}_{HF}}{{BW}_{LF} ∗ m} ,$
wherein BW_{LF} represents the channel bandwidth of the first link, BW_{HF} represents the channel bandwidth of the second link, and m denotes a multiplication parameter.

7. The method of claims 4 to 6, wherein the phase noise reference matrix of the second link is obtained by interpolation on the first matrix.

8. The method of any one of claims 1 to 7, wherein the first information comprises a phase noise estimation result of the first link.

9. The method of claim 8, wherein the phase noise estimation result of the first link is obtained based on a pilot subcarrier of the first link.

10. The method of any one of claims 1 to 9, wherein the phase noise comprises a common phase error.

11. The method of any one of claims 1 to 10, wherein the first operation is performed according to one or more of following information:
a channel bandwidth of the first link;
a channel bandwidth of the second link;
the channel center frequency of the first link; or
the channel center frequency of the second link.

12. The method of any one of claims 1 to 11, wherein the first information is determined by a first physical layer protocol data unit (PPDU) transmitted by the first link, the first operation is related to phase noise of a second PPDU transmitted by the second link, the first PPDU and the second PPDU being transmitted simultaneously.

13. The method of any one of claims 1 to 12, wherein in response to a channel bandwidth of the second link being m × M, a tone plan of the second link corresponds to a tone plan for a channel bandwidth M, wherein m is a multiplication parameter.

14. The method of claim 13, wherein
a number of pilot subcarriers in a subcarrier resource unit of a first type is a first number in the tone plan of the second link, and a number of pilot subcarriers in the subcarrier resource unit of the first type is a second number in the tone plan for the channel bandwidth M, the first number being smaller than the second number.

15. The method of claim 13 or 14, wherein the tone plan of the second link satisfies one or more of following:
in response to the channel bandwidth of the second link being m*20MHz, m*40MHz, m*80MHz, m*160MHz, or m*320MHz, a number of data subcarriers in a 26-tone resource unit is 26-p1, a number of pilot subcarriers in the 26-tone resource unit is p1, and p1 is an integer less than 2;
in response to the channel bandwidth of the second link being m*20MHz, m*40MHz, m*80MHz, m*160MHz, or m*320MHz, a number of data subcarriers in a 52-tone resource unit is 52-p2, a number of pilot subcarriers in the 52-tone resource unit is p2, and p2 is an integer less than 4;
in response to the channel bandwidth of the second link being m*20MHz, m*40MHz, m*80MHz, m*160MHz or m*320MHz, a number of data subcarriers in a 106-tone resource unit is 106-p3, a number of pilot subcarriers in the 106-tone resource unit is p3, and p3 is an integer less than 4;
in response to the channel bandwidth of the second link being m*20MHz, m*40MHz, m*80MHz, m*160MHz, or m*320MHz, a number of data subcarriers in a 242-tone resource unit is 242-p4, a number of pilot subcarriers in the 242-tone resource unit is p4, and p4 is an integer less than 8;
in response to the channel bandwidth of the second link being m*40MHz, m*80MHz, m*160MHz, or m*320MHz, a number of data subcarriers in a 484-tone resource unit is 484-p5, a number of pilot subcarriers in the 484-tone resource unit is p5, and p5 is an integer less than 16;
in response to the channel bandwidth of the second link being m*80MHz, m*160MHz, or m*320MHz, a number of data subcarriers in a 996-tone resource unit is 996-p6, a number of pilot subcarriers in the 996-tone resource unit is p6, and p6 is an integer less than 16;
in response to the channel bandwidth of the second link being m*160MHz, or m*320MHz, a number of data subcarriers in 2*996-tone resource units is 2*996-p7, a number of pilot subcarriers in the 2*996-tone resource units is p7, and p7 is an integer less than 32; or
in response to the channel bandwidth of the second link being m*320MHz, a number of data subcarriers in 4*996-tone resource units is 4*996-p8, a number of pilot subcarriers in the 4*996-tone resource units is p8, and p8 is an integer less than 64.

16. The method of any one of claims 1 to 15, further comprising:
transmitting, by the first device, a first field,
wherein the first field indicates one or more of:
whether the first device performs the first operation according to the first information; or
a tone plan of the second link.

17. The method of claim 16, wherein the first field is located in a preamble of a PPDU.

18. The method of claim 17, wherein the first field is located in a universal signal field (U-SIG) and/or an ultra-high reliability signal field (UHR-SIG).

19. A communication method, comprising:
receiving, by a second device, a first field transmitted by a first device,
wherein the first device receives a signal over a first link and a second link, a channel center frequency of the first link is lower than a channel center frequency of the second link, the first information is related to phase noise information of the first link, and the first operation is related to phase noise of the second link,
the first field indicates one or more of following information:
whether the first device performs a first operation according to first information; or
a tone plan of the second link.

20. The method of claim 19, wherein a carrier corresponding to the first link and a carrier corresponding to the second link share a crystal oscillator.

21. The method of claim 19 or 20, wherein the first operation comprises one or more of:
estimating the phase noise of the second link; or
correcting a phase based on the phase noise of the second link.

22. The method of claim 21, wherein the estimating phase noise of the second link comprises: determining a first matrix of the second link,
wherein the first matrix is related to a phase noise reference matrix of the second link.

23. The method of claim 22, wherein the first matrix satisfies: ${CPE}_{HF} = {CPE}_{LF} ∗ \left(a\frac{{fc}_{high}}{{fc}_{low}}+b\right) + c ;$ wherein CPE_{HF} represents the first matrix, CPE_{LF} represents a phase noise reference matrix of the first link, a is related to a channel bandwidth of the first link and/or a channel bandwidth of the second link, b and c denote other parameters affecting phase noise estimation, fc_{low} represents the channel center frequency of the first link, and fc_{high} represents the channel center frequency of the second link.

24. The method of claim 22 or 23, wherein,
a satisfies: $a = \frac{{BW}_{HF}}{{BW}_{LF} ∗ m} ,$
wherein BW_{LF} represents the channel bandwidth of the first link, BW_{HF} represents the channel bandwidth of the second link, and m denotes a multiplication parameter.

25. The method of claims 22 to 24, wherein the phase noise reference matrix of the second link is obtained by interpolation on the first matrix.

26. The method of any one of claims 19 to 25, wherein the first information comprises a phase noise estimation result of the first link.

27. The method of claim 26, wherein the phase noise estimation result of the first link is obtained based on a pilot subcarrier of the first link.

28. The method of any one of claims 19 to 27, wherein the phase noise comprises a common phase error.

29. The method of any one of claims 19 to 28, wherein the first operation is performed according to one or more of following information:
a channel bandwidth of the first link;
a channel bandwidth of the second link;
the channel center frequency of the first link; or
the channel center frequency of the second link.

30. The method of any one of claims 19 to 29, wherein the first information is determined by a first physical layer protocol data unit (PPDU) transmitted by the first link, the first operation is related to phase noise of a second PPDU transmitted by the second link, the first PPDU and the second PPDU being transmitted simultaneously.

31. The method of any one of claims 19 to 30, wherein in response to a channel bandwidth of the second link being m × M, a tone plan of the second link corresponds to a tone plan for a channel bandwidth M, wherein m is a multiplication parameter.

32. The method of claim 31, wherein
a number of pilot subcarriers in a subcarrier resource unit of a first type is a first number in the tone plan of the second link, and a number of pilot subcarriers in the subcarrier resource unit of the first type is a second number in the tone plan for the channel bandwidth M, the first number being smaller than the second number.

33. The method of claim 31 or 32, wherein the tone plan of the second link satisfies one or more of following:
in response to the channel bandwidth of the second link being m*20MHz, m*40MHz, m*80MHz, m*160MHz or m*320MHz, a number of data subcarriers in a 26-tone resource unit is 26-p1, a number of pilot subcarriers in the 26-tone resource unit is p1, and p1 is an integer less than 2;
in response to the channel bandwidth of the second link being m*20MHz, m*40MHz, m*80MHz, m*160MHz, or m*320MHz, a number of data subcarriers in a 52-tone resource unit is 52-p2, a number of pilot subcarriers in the 52-tone resource unit is p2, and p2 is an integer less than 4;
in response to the channel bandwidth of the second link being m*20MHz, m*40MHz, m*80MHz, m*160MHz or m*320MHz, a number of data subcarriers in a 106-tone resource unit is 106-p3, a number of pilot subcarriers in the 106-tone resource unit is p3, and p3 is an integer less than 4;
in response to the channel bandwidth of the second link being m*20MHz, m*40MHz, m*80MHz, m*160MHz, or m*320MHz, a number of data subcarriers in a 242-tone resource unit is 242-p4, a number of pilot subcarriers in the 242-tone resource unit is p4, and p4 is an integer less than 8;
in response to the channel bandwidth of the second link being m*40MHz, m*80MHz, m*160MHz, or m*320MHz, a number of data subcarriers in a 484-tone resource unit is 484-p5, a number of pilot subcarriers in the 484-tone resource unit is p5, and p5 is an integer less than 16;
in response to the channel bandwidth of the second link being m*80MHz, m*160MHz, or m*320MHz, a number of data subcarriers in a 996-tone resource unit is 996-p6, a number of pilot subcarriers in the 996-tone resource unit is p6, and p6 is an integer less than 16;
in response to the channel bandwidth of the second link being m*160MHz, or m*320MHz, a number of data subcarriers in 2*996-tone resource units is 2*996-p7, a number of pilot subcarriers in the 2*996-tone resource units is p7, and p7 is an integer less than 32; or
in response to the channel bandwidth of the second link being m*320MHz, a number of data subcarriers in 4*996-tone resource units is 4*996-p8, a number of pilot subcarriers in the 4*996-tone resource units is p8, and p8 is an integer less than 64.

34. The method of any one of claims 19 to 33, wherein the first field is in a preamble of a PPDU.

35. The method of any one of claims 19 to 34, wherein the first field is located in a universal signal field (U-SIG) and/or an ultra-high reliability signal field (UHR-SIG).

36. A communication device, wherein the communication device is a first device, and comprises:
an execution unit configured to perform a first operation according to first information;
wherein the first device receives a signal over a first link and a second link, a channel center frequency of the first link is lower than a channel center frequency of the second link, the first information is related to phase noise information of the first link, and the first operation is related to phase noise of the second link.

37. The communication device of claim 36, wherein a carrier corresponding to the first link and a carrier corresponding to the second link share a crystal oscillator.

38. The communication device of claim 36 or 37, wherein the first operation comprises one or more of:
estimating the phase noise of the second link; or
correcting a phase based on the phase noise of the second link.

39. The communication device of claim 38, wherein the estimating phase noise of the second link comprises: determining a first matrix of the second link,
wherein the first matrix is related to a phase noise reference matrix of the second link.

40. The communication device of claim 39, wherein the first matrix satisfies: ${CPE}_{HF} = {CPE}_{LF} ∗ \left(a\frac{{fc}_{high}}{{fc}_{low}}+b\right) + c ;$ wherein CPE_{HF} represents the first matrix, CPE_{LF} represents a phase noise reference matrix of the first link, a is related to a channel bandwidth of the first link and/or a channel bandwidth of the second link, b and c denote other parameters affecting phase noise estimation, fc_{low} represents the channel center frequency of the first link, and fc_{high} represents the channel center frequency of the second link.

41. The communication device of claim 39 or 40, wherein
a satisfies: $a = \frac{{BW}_{HF}}{{BW}_{LF} ∗ m} ,$
wherein BW_{LF} represents the channel bandwidth of the first link, BW_{HF} represents the channel bandwidth of the second link, and m denotes a multiplication parameter.

42. The communication device of claims 39 to 41, wherein the phase noise reference matrix of the second link is obtained by interpolation on the first matrix.

43. The communication device of any one of claims 36 to 42, wherein the first information comprises a phase noise estimation result of the first link.

44. The communication device of claim 43, wherein the phase noise estimation result of the first link is obtained based on a pilot subcarrier of the first link.

45. The communication device of any one of claims 36 to 44, wherein the phase noise comprises a common phase error.

46. The communication device of any one of claims 36 to 45, wherein the first operation is performed according to one or more of following information:
a channel bandwidth of the first link;
a channel bandwidth of the second link;
the channel center frequency of the first link; or
the channel center frequency of the second link.

47. The communication device of any one of claims 36 to 46, wherein the first information is determined by a first physical layer protocol data unit (PPDU) transmitted by the first link, the first operation is related to phase noise of a second PPDU transmitted by the second link, the first PPDU and the second PPDU being transmitted simultaneously.

48. The communication device according to any one of claims 36 to 47, wherein in response to a channel bandwidth of the second link being m × M, a tone plan of the second link corresponds to a tone plan for a channel bandwidth M, wherein m is a multiplication parameter.

49. The communication device of claim 48, wherein,
a number of pilot subcarriers in a subcarrier resource unit of a first type is a first number in the tone plan of the second link, and a number of pilot subcarriers in the subcarrier resource unit of the first type is a second number in the tone plan for the channel bandwidth M, the first number being smaller than the second number.

50. The communication device of claim 48 or 49, wherein the tone plan of the second link satisfies one or more of following:
in response to the channel bandwidth of the second link being m*20MHz, m*40MHz, m*80MHz, m*160MHz, or m*320MHz, a number of data subcarriers in a 26-tone resource unit is 26-p1, a number of pilot subcarriers in the 26-tone resource unit is p1, and p1 is an integer less than 2;
in response to the channel bandwidth of the second link being m*20MHz, m*40MHz, m*80MHz, m*160MHz, or m*320MHz, a number of data subcarriers in a 52-tone resource unit is 52-p2, a number of pilot subcarriers in the 52-tone resource unit is p2, and p2 is an integer less than 4;
in response to the channel bandwidth of the second link being m*20MHz, m*40MHz, m*80MHz, m*160MHz or m*320MHz, a number of data subcarriers in a 106-tone resource unit is 106-p3, a number of pilot subcarriers in the 106-tone resource unit is p3, and p3 is an integer less than 4;
in response to the channel bandwidth of the second link being m*20MHz, m*40MHz, m*80MHz, m*160MHz, or m*320MHz, a number of data subcarriers in a 242-tone resource unit is 242-p4, a number of pilot subcarriers in the 242-tone resource unit is p4, and p4 is an integer less than 8;
in response to the channel bandwidth of the second link being m*40MHz, m*80MHz, m*160MHz, or m*320MHz, a number of data subcarriers in a 484-tone resource unit is 484-p5, a number of pilot subcarriers in the 484-tone resource unit is p5, and p5 is an integer less than 16;
in response to the channel bandwidth of the second link being m*80MHz, m*160MHz, or m*320MHz, a number of data subcarriers in a 996-tone resource unit is 996-p6, a number of pilot subcarriers in the 996-tone resource unit is p6, and p6 is an integer less than 16;
in response to the channel bandwidth of the second link being m*160MHz, or m*320MHz, a number of data subcarriers in 2*996-tone resource units is 2*996-p7, a number of pilot subcarriers in the 2*996-tone resource units is p7, and p7 is an integer less than 32; or
in response to the channel bandwidth of the second link being m*320MHz, a number of data subcarriers in 4*996-tone resource units is 4*996-p8, a number of pilot subcarriers in the 4*996-tone resource units is p8, and p8 is an integer less than 64.

51. The communication device of any one of claims 36 to 50, wherein the communication device is further configured to:
transmit a first field;
wherein the first field indicates one or more of:
whether the first device performs the first operation according to the first information; or
a tone plan of the second link.

52. The communication device of claim 51, wherein the first field is located in a preamble of a PPDU.

53. The communication device of claim 52, wherein the first field is located in a universal signal field (U-SIG) and/or an ultra-high reliability signal field (UHR-SIG).

54. A communication device, wherein the communication device is a second device, and comprises:
a receiving unit configured to receive a first field transmitted by a first device;
wherein the first device receives a signal over a first link and a second link, a channel center frequency of the first link is lower than a channel center frequency of the second link, the first information is related to phase noise information of the first link, and the first operation is related to phase noise of the second link,
the first field indicates one or more of following information:
whether the first device performs a first operation according to first information; or
a tone plan of the second link.

55. The communication device of claim 54, wherein a carrier corresponding to the first link and a carrier corresponding to the second link share a crystal oscillator.

56. The communication device of claim 54 or 55, wherein the first operation comprises one or more of:
estimating the phase noise of the second link; or
correcting a phase based on the phase noise of the second link.

57. The communication device of claim 56, wherein the estimating phase noise of the second link comprises: determining a first matrix of the second link,
wherein the first matrix is related to a phase noise reference matrix of the second link.

58. The communication device of claim 57, wherein the first matrix satisfies: ${CPE}_{HF} = {CPE}_{LF} ∗ \left(a\frac{{fc}_{high}}{{fc}_{low}}+b\right) + c ;$ wherein CPE_{HF} represents the first matrix, CPE_{LF} represents a phase noise reference matrix of the first link, a is related to a channel bandwidth of the first link and/or a channel bandwidth of the second link, b and c denote other parameters affecting phase noise estimation, fc_{low} represents the channel center frequency of the first link, and fc_{high} represents the channel center frequency of the second link.

59. The communication device of claim 57 or 58, wherein,
a satisfies: $a = \frac{{BW}_{HF}}{{BW}_{LF} ∗ m} ,$
wherein BW_{LF} represents the channel bandwidth of the first link, BW_{HF} represents the channel bandwidth of the second link, and m denotes a multiplication parameter.

60. The communication device of claims 57 to 59, wherein the phase noise reference matrix of the second link is obtained by interpolation on the first matrix.

61. The communication device of any one of claims 54 to 60, wherein the first information comprises a phase noise estimation result of the first link.

62. The communication device of claim 61, wherein the phase noise estimation result of the first link is obtained based on a pilot subcarrier of the first link.

63. The communication device of any one of claims 54 to 62, wherein the phase noise comprises a common phase error.

64. The communication device of any one of claims 54 to 63, wherein the first operation is performed according to one or more of following information:
a channel bandwidth of the first link;
a channel bandwidth of the second link;
the channel center frequency of the first link; or
the channel center frequency of the second link.

65. The communication device of any one of claims 54 to 64, wherein the first information is determined by a first physical layer protocol data unit (PPDU) transmitted by the first link, the first operation is related to phase noise of a second PPDU transmitted by the second link, the first PPDU and the second PPDU being transmitted simultaneously.

66. The communication device of any one of claims 54 to 65, wherein in response to a channel bandwidth of the second link being m × M, a tone plan of the second link corresponds to a tone plan for a channel bandwidth M, wherein m is a multiplication parameter.

67. The communication device of claim 66, wherein
a number of pilot subcarriers in a subcarrier resource unit of a first type is a first number in the tone plan of the second link, and a number of pilot subcarriers in the subcarrier resource unit of the first type is a second number in the tone plan for the channel bandwidth M, the first number being smaller than the second number.

68. The communication device of claim 66 or 67, wherein the tone plan of the second link satisfies one or more of following:
in response to the channel bandwidth of the second link being m*20MHz, m*40MHz, m*80MHz, m*160MHz or m*320MHz, a number of data subcarriers in a 26-tone resource unit is 26-p1, a number of pilot subcarriers in the 26-tone resource unit is p1, and p1 is an integer less than 2;
in response to the channel bandwidth of the second link being m*20MHz, m*40MHz, m*80MHz, m*160MHz, or m*320MHz, a number of data subcarriers in a 52-tone resource unit is 52-p2, a number of pilot subcarriers in the 52-tone resource unit is p2, and p2 is an integer less than 4;
in response to the channel bandwidth of the second link being m*20MHz, m*40MHz, m*80MHz, m*160MHz or m*320MHz, a number of data subcarriers in a 106-tone resource unit is 106-p3, a number of pilot subcarriers in the 106-tone resource unit is p3, and p3 is an integer less than 4;
in response to the channel bandwidth of the second link being m*20MHz, m*40MHz, m*80MHz, m*160MHz, or m*320MHz, a number of data subcarriers in a 242-tone resource unit is 242-p4, a number of pilot subcarriers in the 242-tone resource unit is p4, and p4 is an integer less than 8;
in response to the channel bandwidth of the second link being m*40MHz, m*80MHz, m*160MHz, or m*320MHz, a number of data subcarriers in a 484-tone resource unit is 484-p5, a number of pilot subcarriers in the 484-tone resource unit is p5, and p5 is an integer less than 16;
in response to the channel bandwidth of the second link being m*80MHz, m*160MHz, or m*320MHz, a number of data subcarriers in a 996-tone resource unit is 996-p6, a number of pilot subcarriers in the 996-tone resource unit is p6, and p6 is an integer less than 16;
in response to the channel bandwidth of the second link being m*160MHz, or m*320MHz, a number of data subcarriers in 2*996-tone resource units is 2*996-p7, a number of pilot subcarriers in the 2*996-tone resource units is p7, and p7 is an integer less than 32; or
in response to the channel bandwidth of the second link being m*320MHz, a number of data subcarriers in 4*996-tone resource units is 4*996-p8, a number of pilot subcarriers in the 4*996-tone resource units is p8, and p8 is an integer less than 64.

69. The communication device of any one of claims 54 to 68, wherein the first field is located in a preamble of a PPDU.

70. The communication device of any one of claims 54 to 69, wherein the first field is located in a universal signal field (U-SIG) and/or an ultra-high reliability signal field (UHR-SIG).

71. A communication device comprising: a memory for storing a program; and a processor for invoking the program in the memory to cause the communication device to perform the method of any one of claims 1 to 35.

72. An apparatus comprising a processor for invoking a program from a memory to cause the apparatus to perform the method of any one of claims 1 to 35.

73. A chip comprising a processor for calling a program from a memory to enable a device on which the chip is mounted to perform the method of any one of claims 1 to 35.

74. A computer-readable storage medium having a program stored thereon that causes a computer to perform the method of any one of claims 1 to 35.

75. A computer program product comprising a program that causes a computer to perform the method of any one of claims 1 to 35.

76. A computer program that causes a computer to perform the method of any one of claims 1 to 35.
